# EUROPÄISCHE PATENTANMELDUNG

(11) **EP 1 030 056 A2**
(43) Veröffentlichungstag der Anmeldung: **23.08.2000**
(21) Anmeldenummer: 00103216.8
(22) Anmeldetag: 17.02.2000
(51) Int. Cl.: F03B 17/06

(54) **Mechanischer Energiewandler aus Strömungsenergie**

(30) Priorität: 19.02.1999 DE 19907180
(71) Anmelder: Irps, Hartwig, Dr.-Ing., D-38159 Vechelde (DE)
(72) Erfinder: Irps, Hartwig, Dr.-Ing., D-38159 Vechelde (DE)

(57) **Zusammenfassung**

Mit der Erfindung wird ein 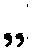 Mechanischer Energiewandler aus Strömungsenergie" vorgeschlagen, mit dem die Strömungsenergie einer Flüssigkeit, vorzugsweise in Fließgewässern, energetisch genutzt werden kann. In einem mit einem Einlauftrichter versehenen Hohlkörper, in der Regel ein Zylinder, sind kraftaufnehmende Profile an einer gelagerten Welle oder direkt am Zylinder hintereinander befestigt, um die ökologische Durchgängigkeit des Fließgewässers zu gewährleisten. Die Rotationsenergie der Welle oder des Zylinders wird über Verbindungselemente und Übersetzungen dem gewünschte Energiewandler Stromgenerator, Wasserpumpe oder allgemein einem mechanischen Getriebe zugeführt und steht damit als Nutzenergie zur Verfügung. Der Aufbau für die Nutzung in natürlichen Gewässern erfolgt schwimmend, fremdkörper- und fischverträglich mit und ohne Saugrohr. Die ökologische Durchgängigkeit bleibt sowohl bei Niedrigwasser als auch bei Hochwasser erhalten. Größere schwimmende Gegenstände können in einfacher Form mittels eines Grobrechens am schwimmfähigen System vorbeigeleitet werden. Es ist leicht möglich, in kleinen Wasserläufen eine energetisch nicht zu nutzende Restwassermenge zu garantierten. Werden vorhandene bauliche Anlagen mit den hintereinander angeordneten Profilen versehen, so führt dieses zu einer Verbesserung der ökologischen Durchgängigkeit. Ein weiterer Einsatzort der Erfindung ist überall dort gegeben, wo beliebige mit Fremdkörpern versehene Flüssigkeitsströmungen energetisch genutzt werden sollen.

## Beschreibung

Die Erfindung betrifft einen 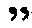 Mechanischen Energiewandler aus Strömungsenergie" zur Energietransformation der Strömungsenergie von Flüssigkeiten, vornehmlich in Wasserläufen, in Nutzenergie. Die Erfindung betrifft keine Schwerkraftmaschinen.

### Stand der Technik:

Die Strömungsenergie von Wasser, vornehmlich in Flüssen, wird seit Jahrtausenden vom Menschen als erneuerbare Energiequelle genutzt.

Im einfachsten Fall werden ebene oder konkave Flächen an einem Wasserrad befestigt und mit der strömenden Flüssigkeit in Kontakt gebracht. Die Wasserräder können fest oder auf einer schwimmenden Plattform installiert werden. Vor der Industriealisierung waren das zum Beispiel die bekannten Flußmühlen. Bekannt sind auch kraftaufnehmende Flächen, häufig Flügelräder, die direkt über ein Getriebe am Stromgenerator befestigt sind und in einer gekapselten wasserdichten Bauart in die strömende Flüssigkeit eingebracht werden. Dies entweder ortsfest, höhenverstellbar, schwimmend oder auch als Schleppgenerator. In der DE 29 33 907 A1 mit einem Feinrechen versehen, damit innerhalb des Hohlkörpers Verstopfungen durch Geschwemmsel sicher vermieden werden können, somit aber mit dem Feinrechen die Strömungsgeschwindigkeit an den Flügelrädern wesentlich verkleinert wird. Bekannt sind auch Flügelrad-Wasserpumpen, die von einer schwimmenden Plattform in die Wasserströmung gehalten werden.

Vorschläge für die Umwandlung der Strömungsenergie von Fließgewässern werden ebenfalls in der DE 28 28 491 C2 und WO 91/07587 gemacht, in denen jedoch andere Wege der Energietransformation vorgeschlagen werden. In DE 28 28 491 C2 und WO 91/07587 dahingehend, dass die mit dem strömenden Wasser in Kontakt befindlichen Turbinen einen weiteren hydraulischen Kreislauf antreiben, um mit dem von der natürlichen Wasserströmung entkoppelten Hydrauliksystem höhere Strömungsgeschwindigkeiten (Druckerhöhung) zu bekommen, die dann wiederum in Nutzenergie transformiert werden soll. Nicht unerhebliche Investitionskosten dürften bei beiden Anlagen erforderlich sein.

### Aufgabe der Erfindung:

Die Erfindung soll es ermöglichen, neben den vorhandenen technisch ausgereiften Wasserkraftanlagen die erneuerbare Energiequelle Wasserkraft auch dort zu nutzen, wo aus technischen, betriebswirtschaftlichen oder ökologischen Gründen bisher keine Nutzung erfolgte. Wegen der geringen Leistung einer strömenden Flüssigkeit werden zu ihrer Nutzung im Vergleich zu herkömmlichen Wasserkraftanlagen Systeme erforderlich, die mit einem geringen Investitionsaufwand bei möglichst umfassender industrieller Vorfertigung zum Einsatz kommen können.

Die Erfindung soll es weiter ermöglichen, dass während der Energietransformation die gewässerökologische Durchgängigkeit erhalten bleibt. Entsprechend sind die kraftaufnehmenden Flächen anzuordnen. Eine separate Ausleitungsstrecke aus dem Fließgewässer soll nicht erforderlich sein. Größeres Geschwemmsel natürlicher Art (Äste, etc.) oder anthropogener Art (Kunststoff, etc.) soll durch eine einfache kostengünstige Anordnung bei geringstmöglicher Reduzierung der Fließgeschwindigkeit am 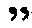 Mechanischen Energiewandler" vorbeigeleitet werden können. Zur Erhöhung der energetischen Transformation der Wasserkraft in Nutzenergie soll es möglich sein, Höhenunterschiede im Fließgewässer auszunutzen. Hierfür soll es möglich sein, durch eine elastische Verbindung den Auslauf des Wassers zu einer geringeren Höhe des Fließgewässers leiten zu können (Saugrohr). Ausser der erforderlichen Befestigungspunkte am Einsatzort soll keine weitere bauliche Maßnahme für den Betrieb erforderlich sein.

Ein schwimmender Aufbau der Erfindung soll die Energietransformation auch bei Hochwasser ermöglichen. Auch vorhandene sanierungsbedürftige Wasserkraftanlagen sollen mit der Erfindung reaktiviert werden können. Der 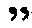 Mechanische Energiewandler aus Strömungsenergie" soll auch aus einem schwimmenden Turbinenteil und einem feststehenden Generatorteil, verbunden über eine ausziehbare Zapfwelle, bestehen können. Auch soll es möglich sein, fluktuierende Strömungen energetisch zu nutzen, beispielsweise die Gezeitenströmung. Eine großtechnische Installation soll auch eine multivalente Nutzung verschiedener Energieträger errmöglichen. Zum Beispiel schwimmende Plattform nach dem Prinzip dieser Erfindung plus Aufbauten für solarelektrische und/oder windenergetische Anlagen, auch in Kombination mit fossilen Energieträgern zur garantierten Energiebereitstellung.

Weiter soll die Erfindung auch dort zum Einsatz kommen können, wo neben Gewässerströmungen auch andere strömende Flüssigkeiten energetisch genutzt werden können. Zum Beispiel in Kläranlagen, Landwirtschaft oder in der Industrie.

### Lösung:

Die Aufgabe wird durch die Merkmale der Patentansprüche 1 bis 4 gelöst.

Im folgenden werden Ausführungsbeispiele entsprechend Fig. 1-4 als Realisierung des Patentanspruches 1 und ohne Fig. nach Patentanspruch 3 beschrieben.
Fig. 1: Draufsicht mit 2 Strömungswegen
Fig. 2: Ansicht A-B aus Fig. 1; statt 2 jetzt 3 Strömungswege
Fig. 3: Ansicht C-D aus Fig. 1
Fig. 4: Analog zu Fig. 3 (andere Art der Kraftübertragung)

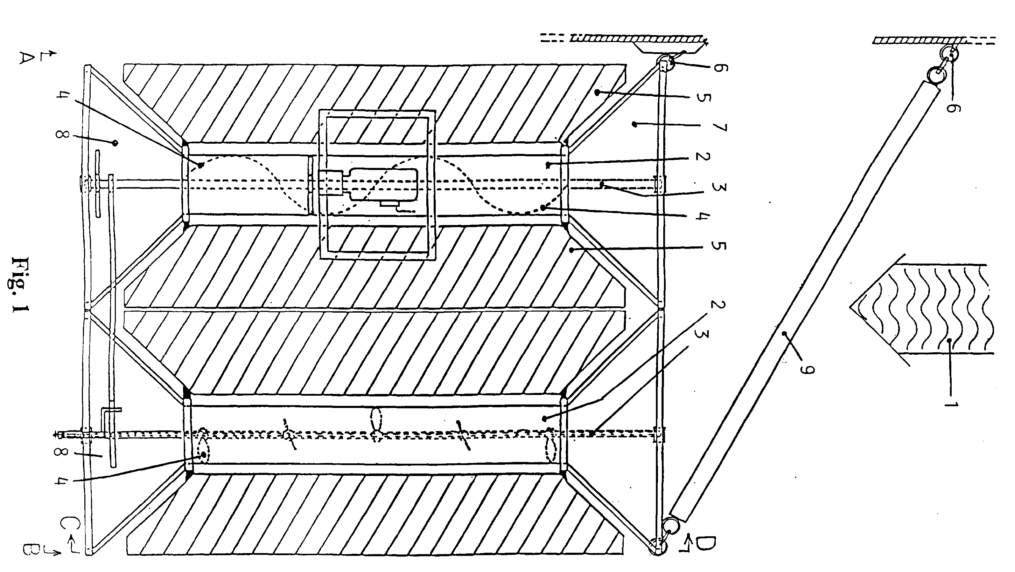

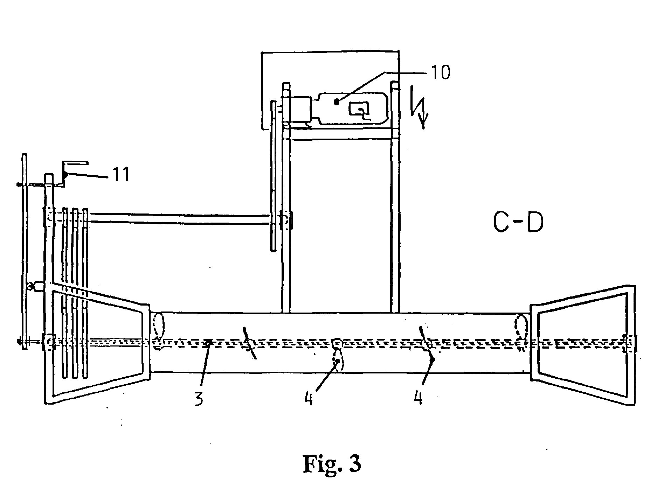

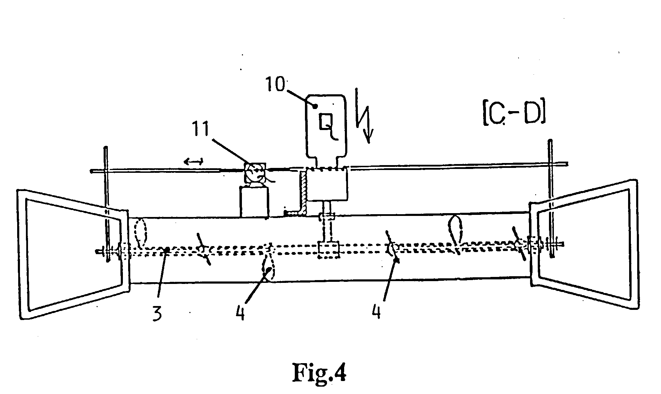

In Fig. 1 wird ein schwimmfähiger 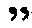 Mechanischer Energiewandler aus Strömungsenergie" mit zwei Zylindern **2**, vier Schwimmkörpern **5**, zwei Einlauftrichtern **7**, zwei Auslauftrichtern **8**, einem Grobrechen **9**, zwei höhenverstellbaren Befestigungen **6** in einer natürlichen Wasserströmung **1**, dargestellt. Im Zylinder **2** sind hintereinander kraftaufnehmende Flächen **4** mit dem Ziel derart angebracht, damit die gewässerökologische Durchgängigkeit umfassend erhalten bleibt. Durch die hintereinander angeordneten Kraftauthehmer **4**, die jeweils lediglich in einem begrenzten Kreissegment kraftschlüssig wirken, können sowohl Fische als auch Fremdkörper in Strömungsrichtung passieren. Als kraftaufhehmende Flächen **4** sind ein Schneckenprofil und hintereinander angeordnete Propellerflügel dargestellt worden. Die Steigungen der kraftaufnehmenden Flächen **4** sind der optimalen Energiewandlung anzupassen, in Fig. 3 und Fig. 4 in verstellbarer Form. Auch ein einziger Propellerflügel mit schneckenähnlicher Steigung könnte als kraftauthehmendes Profil ausreichend sein.

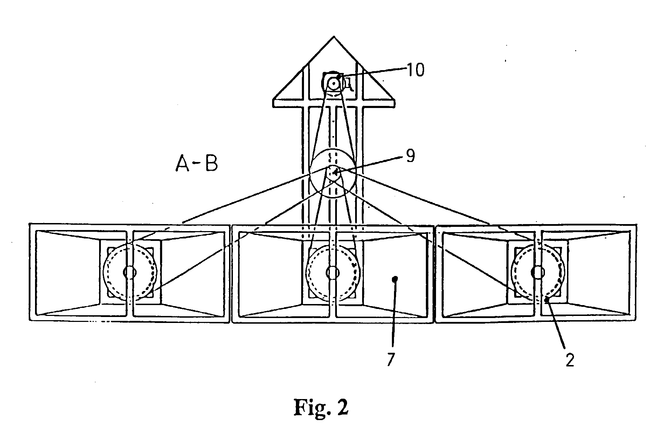

In Fig. 2 werden als Schnitt A-B aus Fig. 1 statt zwei jetzt drei Zylinder **2** mit Einlauftrichtern **7** dargestellt, die mechanisch auf eine Welle **9** wirken und Rotationsenergie einem Stromgenerator **10** zuführen.

Fig. 3 und Fig. 4 zeigen eine Seitenansicht C-D aus Fig. 1 mit einzelnen Propellerflügeln als kraftaufnehmende Flächen **4**. Fig. 3 und Fig. 4 unterscheiden sich in der Art der Verbindung der Welle **3** zum Stromgenerator **10.** Möglich ist auch, die Welle **3** schräg in den Zylinder **2** so zu führen, damit das Ende der Welle **3** aus dem Wasserlauf zwecks Anbringung eines Getriebes und Generators herausragt. Der Stromgenerator **10** kann auch durch eine Wasserpumpe oder allgemein durch einen mechanischen Antrieb ersetzt werden. Verstellmechanismen **11** zur Anpassung der Steigungen der kraftauthehmenden Flächen an die Wasserströmung können entsprechend dem Stand der Technik (z.B. durch eine Hohlwelle; vollautomatisch oder Verstellung von Hand) installiert werden.

Ohne figürliche Darstellung ist es aber auch möglich, die kraftaufnehmenden Flächen an der Innenwand des Zylinders **2** zu befestigen und den Zylinder **2** verlustarm zu lagern. Diese Konstruktionsart erhöht weiter die Fremdkörper- und Fischverträglichkeit, da im Bereich des dann mitrotierenden Zylinders **2** keine Relativbewegungen vorhanden sind. Für die Auskopplung der Rotationsenergie bietet sich jetzt der Zylinder **2** selbst an. Eine Kombination der Patentansprüche 1 und 3 ist auch möglich.

Wird die Konstruktion des 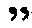 Mechanischen Energiewandlers aus Strömungsenergie" mit einem Saugrohr verbunden, so wird durch die unterschiedlichen Potentialhöhen zwischen Einlauftrichter und Saugrohr-Auslauf der Nutzenergieertrag erhöht. Der Auslauf des Saugrohres kann z.B. unterhalb einer Staumauer liegen und bauseits in der Höhe so angebracht werden, damit eine garantierte Restwassermenge in regenarmen Zeiten im Flußlauf verbleiben kann. Die gewässerökologische Forderung nach einer definierten Restwassemenge kann somit leicht erfüllt werden. Möglich ist beispielsweise auch die Anbringung von Kufen an den Schwimmkörpern, die bei Niedrigwasser auf dem Boden des Wasserlaufes aufsetzen und somit eine Restwassermenge, allerdings energetisch nicht zu nutzen, garantieren.

## Patentansprüche

1. **Mechanischer Energiewandler aus Strömungsenergie**
mit einem von einer Flüssigkeit (1) durchströmten Hohlkörper, der Hohlkörper in der Regel aus einem Zylinder (2) besteht, in dem Zylinder (2) mittig oder schräg eine Welle (3) mit kraftauthehmenden Profilen (4) gelagert ist, der Zylinder bei allseitiger Umströmung zur Positionierung in einer Flüssigkeit (1) mit Schwimmkörpern (5) und mit einer in der Höhe variablen Verankerung (6) versehen ist,
**dadurch gekennzeichnet,**
dass auf der Welle (3) einzelne (ein oder mehrere) kraftaufnehmende Profile (4) (Propellerschaufeln, Schnecke) hintereinander versetzt oder dem Schneckenverlauf folgend angeordnet sind mit mechanischer Kopplung zum Nutzenergiewandler.

2. **Mechanischer Energiewandler aus Strömungsenergie nach Anspruch 1,**
**dadurch gekennzeichnet,**
dass mehrere Zylinder (2) zu einem gemeinsamen schwimmenden Baukastensystem zusammengefügt werden können.

3. **Mechanischer Energiewandler aus Strömungsenergie**
mit einem von einer Flüssigkeit (1) durchströmten Hohlkörper, der Hohlkörper in der Regel aus einem Zylinder (2) besteht, in dem Zylinder (2) mittig oder schräg eine Welle (3) mit kraftaufnehmenden Profilen (4) gelagert sein kann, der Zylinder bei allseitiger Umströmung zur Positionierung in einer Flüssigkeit (1) mit Schwimmkörpern (5) und mit einer in der Höhe verstellbaren Verankerung (6) versehen ist,
**dadurch gekennzeichnet,**
dass der Zylinder (2) drehbar gelagert ist, die kraftaufnehmenden Profile (4) im Bereich des Zylinders (2) an der Innenwand des Zylinders (2) befestigt sind und einzelne (ein oder mehrere) kraftauthehmende Profile (4) (Propellerschaufeln, Schnecke) hintereinander versetzt oder dem Schneckenverlauf folgend nur im Bereich des Zylinders oder auch darüber hinaus, dann verbunden über eine Achse und wahlweise umhüllt durch einen weiteren Hohlkörper, angeordnet sind mit mechanischer Kopplung zum Nutzenergiewandler.

4. **Mechanischer Energiewandler aus Strömungsenergie nach Anspruch 3.,**
**dadurch gekennzeichnet,**
dass mehrere Zylinder (2) zu einem gemeinsamen schwimmenden Baukastensystem zusammengefügt werden können.
